# EUROPEAN PATENT SPECIFICATION

(11) **EP 4 365 451 B1**
(45) Date of publication and mention of the grant of the patent: **25.09.2024**
(21) Application number: 22205007.2
(22) Date of filing: 02.11.2022
(51) Int. Cl.: F04C 2/10, F04C 15/06, F16K 1/42, F16K 15/04, F16K 27/02

(54) **CHECK VALVE AND HYDRAULIC GEROTOR OR GEROLER MACHINE**
RÜCKSCHLAGVENTIL UND HYDRAULISCHE GEROTOR- ODER GEROLERMASCHINE
CLAPET ANTI-RETOUR ET MACHINE HYDRAULIQUE À GÉROTOR

(43) Date of publication of application: 08.05.2024
(73) Proprietor: Danfoss A/S, 6430 Nordborg (DK)
(72) Inventor: Bagri, Jayant, 6430 Nordborg (DK); Muni, Rishi, 6430 Nordborg (DK)
(74) Representative: Keil & Schaafhausen Patentanwälte PartGmbB

(56) References cited:
- EP-A1- 1 947 342
- WO-A1-2021/089645
- CN-A- 109 538 795
- CN-U- 209 818 800
- JP-A- 2006 200 429
- US-A- 4 976 594
- US-A1- 2014 105 775
- US-A1- 2014 334 957

## Description

The present invention relates to a check valve comprising a valve housing having a first port and a second port connected to a valve chamber, a valve seat having a valve seat axis and being arranged between the first port and the valve chamber, and a valve element movably arranged within the valve chamber between the valve seat and a stop face opposite the valve seat, wherein the housing comprises a first part having the first port and a second part having the second port and being connected to the first part.

Furthermore, the invention relates to a hydraulic gerotor or geroler machine comprising such a check valve.

Such a check valve is known, for example, from JP 2012-52636 A. The valve element is in form of a ball which is guided between ducts, wherein the ducts connect the valve chamber to the second port.

Further valves are known from WO 2021/089645 A1, US 2014/334957 A1, CN 109 538 795 A, JP 2006-200429 A, CN 209 818 800 U, EP 1 947 342 A1, US 2014/105775 A1 and US 4 976 594 A.

A check valve is used to allow a flow of a fluid in one direction and to block the flow of the fluid in the opposite direction, at least when there is a pressure gradient across the check valve. Current designs of check valves, in particular for hydraulic motors, especially gerotor/geroler motors, use many components or complicated structures, which increases the package size and adds costs. It usually increases also external leakage points.

The object underlying the invention is to have a simple check valve design.

This object is solved with a check valve described at the outset with the features of claim 1.

Inter alia, the second port opens into the stop face by means of an array of holes, wherein a cross section area of the holes is smaller than the smallest cross section area of the valve element.

In such a check valve basically only three parts are necessary, namely the two parts of the valve housing and the valve element. The array of holes allow a flow of the fluid when the check valve is open. The valve element is stopped at the stop surface, however, it cannot close all of the holes of the array, so that a flow is still possible.

In an embodiment of the invention the area of the array is larger than the largest cross section of the valve element. Thus, a sufficient flow area is permanently available, so that a pressure drop in the check valve can be kept low in an open condition of the check valve.

The valve element is moveable perpendicular to the valve seat axis. In other words, the valve element is not guided within the valve chamber, but is free to move in the valve chamber.

In an embodiment of the invention the stop face is a plane face. This simplifies the machining of the second part.

In an embodiment of the invention the stop face is in form of a bowl. This simplifies assembly of the check valve, when in a mounting position the stop face is arranged at the lowest position in direction of gravity. The valve element can simply be positioned on the stop face and the first housing part can be mounted to the second housing part from the top. The form of the bowl differs from the form of the valve element, so that the valve element cannot close all of the holes at the same time.

The stop face is part of an end face of the second part. The end face of the second part is the face which contacts the first part of the valve housing. This simplifies further the design of the check valve.

In an embodiment of the invention the holes cover at least 60% of the stop face. The stop face is as large as the cross section of the valve chamber. Basically, the area can cover the whole cross section of the valve chamber. However, in most cases it is sufficient when the holes cover at least 60% of the stop face.

In an embodiment of the invention at least some of the holes are arranged on a circle. This again allows for a flow of fluid out of the second port independently of the exact position of the valve element. A main flow bore can be arranged at the centre of the circle. In an open condition, this main flow bore might be closed or at least partly closed by the valve element. However, at least some of the remaining holes of the array remain open.

In an embodiment of the invention the circle has a centre that coincides with the valve seat access. Accordingly, symmetric conditions can be achieved which is positive for the flow of the fluid through the check valve.

The array covers an area which is larger than a cross section of the second port. Thus, enough area is available for the array of holes.

The valve element is in form of a ball. The ball can be used, on the one hand, to close the check valve when it seats against the valve seat. On the other hand, when it rests against the stop face, there is always a space available through which the flow of fluid can escape to the second port.

In an embodiment of the invention a sealing is arranged between the first housing part and the second housing part. Such a sealing keeps the risk of a leakage low.

The invention furthermore relates to a hydraulic gerotor or geroler machine comprising such a check valve.

A hydraulic gerotor or geroler machine is an orbiting machine which is preferably used as a hydraulic motor for different functions. One function of a check valve is to prevent cavitation which may occur during pumping operation of the hydraulic motor due to inertial loading of the machine/application. Generally, in a gerotor or geroler motor which is used for swing application of an excavator, the check valve is used to connect case flow line to one of the directional ports so as to direct the drain line/case flow to the respective directional ports during pumping operation of the hydraulic motor.

In an embodiment of the invention the machine comprises a machine housing, wherein a part of the machine housing forms a part of the valve housing. This simplifies the construction of the hydraulic machine.

In an embodiment of the invention the part of the machine housing forms the first part of the valve housing. Thus, fluid is blocked from entering the hydraulic machine in this case. However, in many cases, such a hydraulic machine will comprise two such check valves, which open in opposite directions. In this case the machine housing forms the second part of the valve housing of the second check valve.

Preferred embodiments of the invention will now be described with reference to the drawings, wherein:
Fig. 1 shows a schematic illustration of a check valve in a mounting position,
Fig. 2 shows a schematic perspective view of the check valve,
Fig. 3 shows a schematic view of the check valve in closed condition,
Fig. 4 shows a schematic view of the check valve in open condition and
Fig. 5 shows a schematic cross-sectional view of a hydraulic gerotor or geroler machine comprising such a check valve.

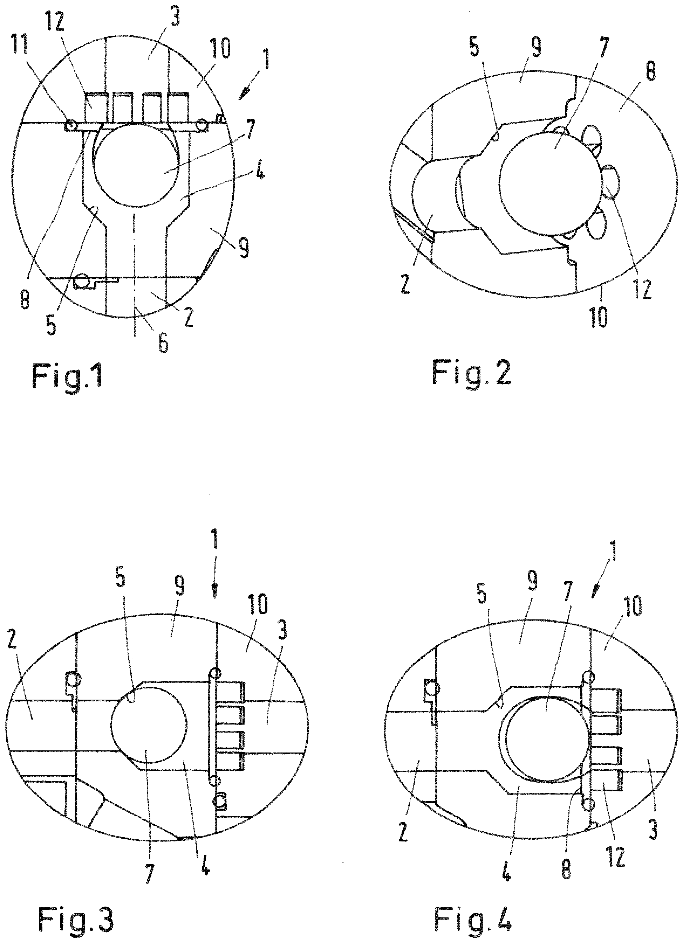

Figure 1 shows a check valve 1 comprising valve housing having a first port 2 and a second port 3. Both ports 2, 3 are connected to a valve chamber 4. The first port 2 opens into the valve chamber 4 by means of a valve seat 5. The valve seat 5 comprises a valve seat axis 6.

A valve element 7 is arranged in the valve chamber 4. The valve element 7 is in form of a ball. The valve element 7 is moveably arranged within the valve chamber 4 between the valve seat 5 and a stop face 8 opposite the valve seat 5.

The valve housing comprises a first part 9 having the first port 2 and a second part 10 having the second port 3. The second part 10 is connected to the first part 9. Sealing means 11, for example an O-ring, are arranged between the first part 9 and the second part 10.

The second port 3 opens into the stop face 8 by means of an array of holes 12. The cross section of the holes 12 is smaller than the smallest cross section area of the valve element 7. In the embodiment described the valve element 7 is in form of a ball, so that the diameter of the ball defines the cross-section area of the valve element. The holes 12 can be in form of cylinder bores having a diameter which is smaller than the diameter of the ball shaped valve element 7.

The stop face 8 is a plane face. Thus, when the valve element 7 rests against the stop face 8, there is always a number of holes 12 open to allow a fluid to escape out of the valve chamber 4 to the second port 3.

In another embodiment the stop face 8 is in form of a bowl. The bowl can be rather flat. The form of the bowl serves to facilitate assembly of the check-valve, when the stop face 8 is arranged below the valve element 7. In the case the valve element 7 is simply positioned in the bowl and the first part 9 can be mounted to the second part 10 without the risk that the valve element 7 gets lost during assembly.

As can be seen in figures 1 to 4, the diameter of the valve chamber 4 is much larger than the diameter of the valve element 7. Accordingly, the valve element 7 is not only moveable between the valve seat 5 and the stop face 8, but it can also move perpendicular to the valve seat axis 6. In other words, the valve element 7 is not guided in the valve chamber 4.

According to the invention, the stop face 8 is an end face of the second part 10.

This means that the stop face 8 forms a part of the end face of the second part 10. This end face contacts the first part 9, when the two parts 9, 10 are connected to each other. The holes are machined into this stop face 8, for example by drilling.

The holes 12 cover at least 60% of the stop face. This takes into account, that a circular hole leaves material around it. Even when the whole cross section of the valve chamber 4 would be covered by holes 12, there would be not all of the cross section available for a fluid flow.

At least some of the holes 12 are arranged on a circle, as can be seen in figure 2. The circle has a centre that coincides with the valve seat access. Thus, the check valve 1 has a rotational symmetry. A main flow hole (not shown) can be arranged at the centre.

The array in which the holes 12 are arranged covers an area which is larger than a cross section of the second port 3. However, the holes 12 at least partly overlap the cross section of the port 3. This again makes sure that there is always a way for the fluid to flow through the check valve 1, when the check valve 1 is open.

Fig. 3 shows the check valve 1 in a closed condition. When the flow of fluid is directed from the second port 3 to the first port 2 the valve element 7 is dragged to the valve seat 5 and closes the check valve 1.

Fig. 4 shows the check valve 1 in open condition. In this condition the flow is directed from the first port 2 to the second port 3 and the valve element 7 is lifted of the valve seat 5 and brought into a contact with the stop face 8. However, as can be seen in figure 4, there is always at least one hole 12 open which is connected to the second port 3, so that fluid can flow out of the valve chamber 4.

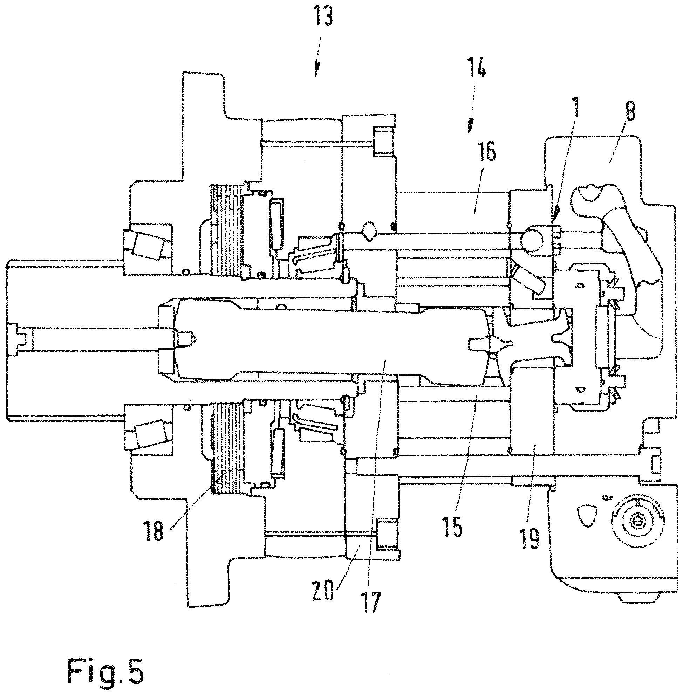

Fig. 5 shows a hydraulic gerotor or geroler machine 13 comprising such a check valve 1. The hydraulic machine 13 comprises a gerotor set 14. The gerotor set 14 comprises a star wheel 15 rotating and orbiting within ring gear 16 (when the gerotor set 14 comprises rollers instead of the tips of the teeths of the ring gear 16, it is referred to as "geroler"). A dog bone 17 transfers the rotating movement to a working section, which in the present embodiment comprises a brake 18.

The hydraulic machine 14 comprises a valve plate 19 on one side of the gerotor set 14 and a wear plate 20 on the opposite side of the gerotor set 14.

It should be mentioned, that the machine 13 comprises not only one check valve 1 (as shown), but two check valves opening in opposite flow directions. The other check valve would only be visible at another cross-sectional view.

Such a hydraulic gerotor or geroler motor is often used in construction equipment, like excavators. Such a check valve 1 in hydraulic motors is used for different functions. One function of the check valve 1 is to prevent cavitation which may occur during pumping operation of the hydraulic motor due to inertial loading of the machine or application.

When a gerotor or geroler motor is used for swing application of the excavator the check valve 1 is used to connect case flow line to one of the directional ports, so as to direct the drain line to the other directional port during pumping operation of the hydraulic motor.

In the check valve 1 shown in figure 5 the valve plate 19 which is part of a machine housing of the hydraulic gerotor or geroler machine 13 forms the first part 9 of the valve housing, while the second part 10 of the valve housing is fixed to the valve plate 19. For the other check valve (not shown) it is just the other way round, so that the valve plate 19 forms the second part 10 of the valve housing.

Fig. 1 shows the check valve 1 in an assembly condition, in which the valve chamber 4 opens upwardly in direction of gravity. Thus, the valve element 7 can be inserted into the valve chamber 4 before fixing the second housing part 10 to the first housing part 9.

Each array of holes 12 comprises holes 12 arranged around a main flow hole and are connected to the second port 3. The second port 3 of one check valve is connected to one directional port and the second port 3 of the other check valve is connected to the other directional port.

When, for example, one directional port is pressurized, the valve element 7 at the port plate 19 will close one passage of case flow with the passage of this directional port while the valve element of the other check valve will open and connect the drain line/case flow with the other directional port during pumping mode of the hydraulic machine.

## Claims

1. Check valve (1) for a hydraulic Gerotor or Geroler machine, the check valve (1) comprising a valve housing having a first port (2) and a second port (3) connected to a valve chamber (4), a valve seat (5) having a valve seat axis (6) and being arranged between the first port (2) and the valve chamber (4), and a valve element (7) movably arranged within the valve chamber (4) between the valve seat (5) and a stop face (8) opposite the valve seat (5), wherein the valve housing comprises a first part (9) having the first port (2) and a second part (10) having the second port (3) and being connected to the first part (9),
wherein the second port (3) opens into the stop face (8) by means of an array of holes (12), wherein the stop face (8) is part of an end face of the second part (10), wherein the end face of the second part (10) is the face which contacts the first part (9) of the valve housing and wherein the holes are machined into the stop face (8),
wherein the valve element (7) is in form of a ball so that a diameter of the valve element (7) defines the cross section area of the valve element (7) and wherein the holes (12) are in form of cylinder bores having a diameter which is smaller than the diameter of the ball-shaped valve element (7), and
wherein the holes (12) at least partly overlap the cross section of the second port (3),
**characterized in that**
only three parts are necessary in the check valve (1), namely the first part (9), the second part (10), and the valve element (7), **in that** the array covers an area which is larger than a cross section of the second port (3), and **in that** the valve element (7) is not guided within the valve chamber (4) and is movable perpendicular to the valve seat axis (6).

2. Check valve according to claim 1, **characterized in that** the area of the array is larger than the largest cross section of the valve element (7).

3. Check valve according to any of claims 1 to 2, **characterized in that** the stop face (8) is a plane face.

4. Check valve according to any of claims 1 to 2, **characterized in that** the stop face (8) is in form of a bowl.

5. Check valve according to any of claims 1 to 4, **characterized in that** the holes (12) cover at least 60% of the stop face (8).

6. Check valve according to any of claims 1 to 5, **characterized in that** at least some of the holes (12) are arranged on a circle.

7. Check valve according to claim 6, **characterized in that** the circle has a center that coincides with the valve seat axis (6).

8. Check valve according to any of claims 1 to 7, **characterized in that** a sealing (11) is arranged between the first part (9) and the second part (10).

9. Hydraulic Gerotor or Geroler machine (13) comprising a check valve (1) according to any of claims 1 to 8.

10. Hydraulic Gerotor or Geroler machine according to claim 9, **characterized in that** the machine comprises a machine housing, wherein a part (19) of the machine housing forms a part of the valve housing.

11. Hydraulic Gerotor or Geroler machine according to claim 10, **characterized in that** the part (19) of the machine housing forms the first part (9) of the valve housing.

## Patentansprüche

1. Rückschlagventil (1) für eine hydraulische Gerotor- oder Geroler-Maschine, wobei das Rückschlagventil (1) ein Ventilgehäuse mit einem ersten Anschluss (2) und einem zweiten Anschluss (3), die mit einer Ventilkammer (4) verbunden sind, einen Ventilsitz (5) mit einer Ventilsitzachse (6), der zwischen dem ersten Anschluss (2) und der Ventilkammer (4) angeordnet ist und einem Ventilelement (7), das innerhalb der Ventilkammer (4) zwischen dem Ventilsitz (5) und einer dem Ventilsitz (5) gegenüberliegenden Anschlagfläche (8) beweglich angeordnet ist aufweist, wobei das Ventilgehäuse einen ersten Teil (9) mit dem ersten Anschluss (2) und einen zweiten Teil (10) mit dem zweiten Anschluss (3) aufweist und mit dem ersten Teil (9) verbunden ist,
wobei der zweite Anschluss (3) mittels einer Anordnung von Löchern (12) in die Anschlagfläche (8) mündet, wobei die Anschlagfläche (8) Teil einer Endfläche des zweiten Teils (10) ist, wobei die Endfläche des zweiten Teils (10) die Fläche ist, die den ersten Teil (9) des Ventilgehäuses berührt und wobei die Löcher in die Anschlagfläche (8) eingearbeitet sind,
wobei das Ventilelement (7) die Form einer Kugel hat, so dass ein Durchmesser des Ventilelements (7) die Querschnittsfläche des Ventilelements (7) definiert, und wobei die Löcher (12) die Form von Zylinderbohrungen mit einem Durchmesser haben, der kleiner ist als der Durchmesser des kugelförmigen Ventilelements (7), und
wobei die Löcher (12) den Querschnitt des zweiten Anschlusses (3) zumindest teilweise überlappen, **dadurch gekennzeichnet, dass** in dem Rückschlagventil (1) nur drei Teile erforderlich sind, nämlich der erste Teil (9), der zweite Teil (10) und das Rückschlagventil (10).

2. Rückschlagventil nach Anspruch 1, **dadurch gekennzeichnet, dass** die Fläche der Anordnung größer ist als der größte Querschnitt des Ventilelements (7).

3. Rückschlagventil nach einem der Ansprüche 1 bis 2, **dadurch gekennzeichnet, dass** die Anschlagfläche (8) eine ebene Fläche ist.

4. Rückschlagventil nach einem der Ansprüche 1 bis 2, **dadurch gekennzeichnet, dass** die Anschlagfläche (8) die Form einer Schale hat.

5. Rückschlagventil nach einem der Ansprüche 1 bis 4, **dadurch gekennzeichnet, dass** die Löcher (12) mindestens 60 % der Anschlagfläche (8) bedecken.

6. Rückschlagventil nach einem der Ansprüche 1 bis 5, **dadurch gekennzeichnet, dass** zumindest ein Teil der Löcher (12) auf einem Kreis angeordnet ist.

7. Rückschlagventil nach Anspruch 6, **dadurch gekennzeichnet, dass** der Kreis einen Mittelpunkt aufweist, der mit der Ventilsitzachse (6) zusammenfällt.

8. Rückschlagventil nach einem der Ansprüche 1 bis 7, **dadurch gekennzeichnet, dass** zwischen dem ersten Teil (9) und dem zweiten Teil (10) eine Dichtung (11) angeordnet ist.

9. Hydraulische Gerotor- oder Geroler-Maschine (13) mit einem Rückschlagventil (1) nach einem der Ansprüche 1 bis 8.

10. Hydraulische Gerotor- oder Geroler-Maschine nach Anspruch 9, **dadurch gekennzeichnet, dass** die Maschine ein Maschinengehäuse umfasst, wobei ein Teil (19) des Maschinengehäuses einen Teil des Ventilgehäuses bildet.

11. Hydraulische Gerotor- oder Geroler-Maschine nach Anspruch 10, **dadurch gekennzeichnet, dass** der Teil (19) des Maschinengehäuses den ersten Teil (9) des Ventilgehäuses bildet.

## Revendications

1. Clapet anti-retour (1) pour une machine hydraulique de type Gerotor ou Geroler, le clapet anti-retour (1) comprenant un corps de clapet ayant un premier orifice (2) et un second orifice (3) reliés à une chambre de clapet (4), un siège de clapet (5) ayant un axe de siège de clapet (6) et étant agencé entre le premier orifice (2) et la chambre de clapet (4), et un élément de clapet (7) agencé de manière mobile à l'intérieur de la chambre de clapet (4) entre le siège de clapet (5) et une face d'arrêt (8) opposée au siège de clapet (5), dans lequel le corps de clapet comprend une première partie (9) présentant le premier orifice (2) et une seconde partie (10) présentant le second orifice (3) et étant reliée à la première partie (9), dans lequel le second orifice (3) débouche dans la face d'arrêt (8) au moyen d'un réseau de trous (12), dans lequel la face d'arrêt (8) fait partie d'une face d'extrémité de la seconde partie (10), dans lequel la face d'extrémité de la seconde partie (10) est la face qui est en contact avec la première partie (9) du corps de clapet et dans lequel les trous sont usinés dans la face d'arrêt (8),
dans lequel
l'élément de clapet (7) se présente sous la forme d'une bille de sorte qu'un diamètre de l'élément de clapet (7) définit l'aire de section transversale de l'élément de clapet (7) et dans lequel les trous (12) sont sous la forme d'alésages de cylindre ayant un diamètre qui est inférieur au diamètre de l'élément de clapet en forme de boule (7), et
dans lequel
les trous (12) recouvrent au moins partiellement la section transversale du second orifice (3),
**caractérisé en ce que** seules trois parties sont nécessaires dans le clapet anti-retour (1), à savoir la première partie (9), la seconde partie (10) et l'élément de soupape (7), **en ce que** le réseau couvre une aire qui est plus grande qu'une section transversale du second orifice (3) et **en ce que** l'élément de clapet (7) n'est pas guidé à l'intérieur de la chambre de clapet (4) et est mobile perpendiculairement à l'axe de siège de clapet (6).

2. Clapet anti-retour selon la revendication 1, **caractérisé en ce que** l'aire du réseau est plus grande que la plus grande section transversale de l'élément de clapet (7).

3. Clapet anti-retour selon l'une des revendications 1 à 2, **caractérisé en ce que** la face d'arrêt (8) est une face plane.

4. Clapet anti-retour selon l'une des revendications 1 à 2, **caractérisé en ce que** la face de d'arrêt (8) se présente sous la forme d'un bol.

5. Clapet anti-retour selon l'une des revendications 1 à 4, **caractérisé en ce que** les trous (12) couvrent au moins 60% de la face d'arrêt (8).

6. Clapet anti-retour selon l'une des revendications 1 à 5, **caractérisé en ce qu'**au moins certains des trous (12) sont agencés sur un cercle.

7. Clapet anti-retour selon la revendication 6, **caractérisé en ce que** le cercle présente un centre qui coïncide avec l'axe de siège de clapet (6).

8. Clapet anti-retour selon l'une des revendications 1 à 7, **caractérisé en ce qu'**un joint d'étanchéité (11) est agencé entre la première partie (9) et la seconde partie (10).

9. Machine hydraulique de type Gerotor ou Geroler (13) comprenant un clapet anti-retour (1) selon l'une des revendications 1 à 8.

10. Machine hydraulique de type Gerotor ou Geroler selon la revendication 9, **caractérisé en ce que** la machine comprend un boîtier de machine, dans laquelle une partie (19) du boîtier de machine forme une partie du corps de clapet.

11. Machine hydraulique de type Gerotor ou Geroler selon la revendication 10, **caractérisé en ce que** la partie (19) du boîtier de machine forme la première partie (9) du corps de clapet.
